# EUROPEAN PATENT SPECIFICATION

(11) **EP 4 560 851 B1**
(45) Date of publication and mention of the grant of the patent: **08.04.2026**
(21) Application number: 23211870.3
(22) Date of filing: 23.11.2023
(51) Int. Cl.: H01S 3/00, G02F 1/03

(54) **METHOD AND SYSTEM FOR SPECTRAL NARROWING OF LASER LIGHT PULSES**
VERFAHREN UND SYSTEM ZUR SPEKTRALEN VERENGUNG VON LASERLICHTPULSEN
PROCÉDÉ ET SYSTÈME POUR LE RÉTRÉCISSEMENT SPECTRAL D'IMPULSIONS DE LUMIÈRE LASER

(43) Date of publication of application: 28.05.2025
(73) Proprietor: Uniwersytet Warszawski, 00-927 Warszawa (PL)
(72) Inventor: KARPINSKI, Michal, 01-755 Warszawa (PL); SOSNICKI, Filip, 71-556 Szczecin (PL)
(74) Representative: AOMB Polska Sp. z.o.o.

(56) References cited:
- SOSNICKI F ET AL: "Aperiodic electro-optic time lens for spectral manipulation of single-photon pulses", APPLIED PHYSICS LETTERS, AMERICAN INSTITUTE OF PHYSICS, 2 HUNTINGTON QUADRANGLE, MELVILLE, NY 11747, vol. 116, 234003, 11 June 2020 (2020-06-11), XP012247645, ISSN: 0003-6951, [retrieved on 20200611], DOI: 10.1063/5.0011077
- FILIP SOSNICKI: "Interface between picosecond and nanosecond quantum light pulses", NATURE PHOTONICS, vol. 17, no. 9, 25 May 2023 (2023-05-25), pages 761 - 766, XP093161473, DOI: 10.1038/s41566-023-01214-z

## Description

### Technical Field

The object of the invention is a method for spectral narrowing of laser pulses (with a simultaneous increase in their coherence time), with automatic tunability with respect to the central wavelength of these pulses. The method according to the invention is based on electro-optic phase modulation light, and on chromatic dispersion. The object of the invention is also a proper system for spectral narrowing of laser light pulses. In particular, the invention allows for narrowing the spectra of laser pulses, at the same time increasing their spectral density.

### Prior Art

The basic method of obtaining laser pulses is the use of a mode-locking pulsed laser, described, e.g. in the monograph of A. Weiner "Ultrafast optics" 2009 John Wiley & Sons, Inc. Such lasers are very popular, and they emit light with typical spectral widths of > 1 nm. Subsequently, in order to obtain narrow-band light pulses, they are modified via spectral filtering. Tunable spectral filters in the form of a 4-f line (described in "Ultrafast optics"), a monochromator, an optical cavity, or interference filters (incapable of tuning) are used in order to obtain pulses with a spectral width of < 1 nm. This allows for spectral filtering of laser pulses, with a simultaneous increase in their coherence time. However, the tuning of such a filter, in particular its central wavelength, is slow (4-f, a monochromator and an optical cavity), or it requires replacing the interference filter. The duration of such tuning is usually in the order of single (or more) seconds, allowing for sweeping the central wavelength with single hertz frequencies. Moreover, spectral filtering is by definition lossy, where the total energy is reduced by the ratio of the input and output spectral widths.

One solution for obtaining fast tuning of the central laser wavelength is the use of a femtosecond pulsed laser, followed by the tuning of its central wavelength using soliton generation in an optical fibre. This results in shifting the central wavelength of modulated light pulses in a linear manner with respect to the energy (power) of laser pulses, and depending on the length of the optical fibre. Therefore, fast sweeping of the central wavelength is obtained by fast sweeping of the optical power of the laser beam (e.g. by means of a variable optical attenuator-VOA, for example: N. Nishizawa, T. Goto, Compact System of Wavelength-Tunable Femtosecond Soliton Pulse Generation Using Optical Fibers, IEEE Photonics Technology Letters 11, 325-327 (1999)). However, due to the nature of this effect, i.e. the use of ultrashort light pulses, the spectrum of a single pulse (both input and with a shifted central wavelength of light) is very wide, with a width of at least several nanometres.

It is possible to obtain spectrally narrow-band light pulses with fast tuning of their central wavelength by replacing the laser with a different one, based on dispersion tuning (*dispersion-tuning based wavelength-swept fibre laser,* for example: S. Yamashita, M. Asano, Wide and fast wavelength-tunable mode-locked fiber laser based on dispersion tuning, Optics Express 14, 9299-9306 (2006)). The use of an additional dispersive element in the laser cavity and a change in the repetition frequency of the pulses it generates, results in a change in their central wavelength, which may be swept with a frequency of 200 kHz. However, this requires interfering with the laser itself, or its complete replacement.

Methods based on optical nonlinear processes, such as three-wave-mixing or four-wave-mixing, allow for changing the central wavelength of optical pulses (along with a change in the spectral width under proper conditions), albeit they require an additional pumping laser beam and do not allow for broadband tuning due to limitations imposed by phase matching in an optical nonlinear medium.

The publication Photonic Sensors 3, 320-331 (2013) proposes a method for generating rapidly tunable pulsed laser signals (*wavelength-swept lasers* or *wavelength swept optical signals*)*.* However, it utilises dispersion tuning inside the laser cavity. The solution proposed in the present application is an independent module which can be attached to a pulsed laser, with no need to modify the laser itself.

American patent document [US20130284710A1] describes a method for narrowing the spectrum of diode lasers through the use of dielectric stacks in the laser cavity, comprising an alternating sequence of layers of dielectric material and air, which dielectric stacks are fabricated through controlled laser ablation of the dielectric material. The invention is based on interfering with the structure of the laser cavity of a diode laser; this design does not allow for fast tuning of the laser beam. Moreover, such a laser operates in a continuous-wavemode rather than a pulsed one.

From American patent document [US20120099612A1] there is known a system for spectral narrowing via an external narrowing module, based on the spatial distribution of the wavelength of the light. The bandwidth narrowing module comprises an optical system expanding the beam transversely with respect to the propagation direction of the beam, and comprising a reflection diffraction grating. A first optical component of the bandwidth narrowing module is configured so as to allow a change in the cylindrical disturbance about an axis transverse with respect to an optical axis of the module, which is then impressed on a wavefront of the laser beam. This solution lacks automatic tuning of the spectrum, and this system is not a system with an optical fibre design.

From American patent document [US20070273958A1] there is known a technique similar to the one described in the previously referenced patent document, which utilises the optical Kerr effect. The document describes an optical Fourier transform executed over a wide time function range. An optical pulse generator generates a control light pulse of a shape expressed by a quadratic function or a parabola according to a clock signal. The input signal light pulse is multiplexed by a multiplexer with the signal light, the control light pulse is optically delayed by an optical delay element, so that the timing is matched with the signal light pulse, and introduced into an optical Kerr medium. In the optical Kerr medium, the signal light pulse is modified by the mutual phase modulation between the signal light pulse and the control light pulse in the form of a linear phase modulation (frequency chirp) over the entire pulse or a wide time range. After that, the signal light pulse modulated in this manner is introduced into a dispersion medium having a group velocity dispersion (second-order dispersion), thereby converting the time waveform of the input signal light pulse into the shape of its frequency spectrum. The method presented in here does not allow for broadband tuning of the central signal pulse wavelength, due to the necessity to adjust the group velocity of the signal and control pulse. In particular, a fast change in the central signal pulse wavelength requires an equally fast change in the central wavelength of the control pulse.

American patent document [US20040057474A1] describes a technique for controlling laser bandwidth. The line narrowing system disclosed there has at least one piezoelectric drive and methods for fast detection of the bandwidth, allowing for control of the bandwidth with a response time shorter than approximately 1.0 milliseconds. In a preferable embodiment, the wavelength tuning mirror is subjected to vibrations with a vibration speed of more than 500 vibrations per second in a very narrow range of rotation angles, in order to cause vibrations in nominal wavelength values in order to create a desired effective bandwidth for a series of laser pulses. The described technique is characterised in that the tuning is mechanical, and therefore slow. In particular, this technique requires interfering with the laser and using spatial optical elements (rather than optical fibre techniques).

International patent application [WO2015131908A1] describes an optical transmitter with Orthogonal Frequency-Division Multiplexing (OFDM) for generating an OFDM output signal. The transmitter comprises a first time-domain optical Fourier transform (OFT) assembly, the first OFT assembly being of a K-D-K configuration and comprising a first phase modulator (K), a dispersive element (D) and a second phase modulator (K) in this order. The first and second phase modulators are configurable for exercising a parabolic phase modulation to obtain linearly phase chirp an optical signal so as to have chirp rates of K1 and K2, respectively. The dispersive element has a dispersion parameter D. The phase modulators are configurable to have nominally identical chirp rates, K1 = K2 = K, and the OFT assembly is further configurable such that D = 1/K. The invention further relates to methods of generating an OFDM signal.

The article Sosnicki F et al: "A periodic electro-optic time lens for a spectral manipulation of single-photon pulses", APPLIED PHYSICS LETTERS, vol. 116, 234003, 11 June 2020, presents an experimental demonstration of an aperiodic electro-optic time lens for spectral manipulation of single-photon pulses.

Optical pulses are generated with an erbium femtosecond oscillator. To generate double pulses, the laser output beam is split with a PBS into short and long beam paths, where the latter includes a variable delay line. The beams are then recombined with a beam combiner and projected into the same polarization mode with a linear polarizer at 45°. Then using a half-wave plate and another PBS, the pulses are split into a signal beam and a reference beam. The signal beam first passes through a 1 km long single mode fiber introducing a group delay dispersion and then passes through an electro-optic phase modulator. The optical reference beam passes through an adjustable optical delay and is detected by a fast photodiode. The signal of the photodiode is amplified and drives the electro-optic phase modulator.

### Problem with Prior Art

The problem with prior art is the spectral narrowing of (already existing) light pulses, always around their central wavelength. The solutions known so far from prior art
- require replacing the light source with a different one, with a narrower light pulse spectrum, at the same time with a tunable central wavelength of the light;
- in the case of spectral filters, they do not allow for fast sweeping of the central filter transmission wavelength, so as to adjust it to the light pulses with a variable central wavelength entering the filter pulse by pulse;
- require an additional laser beam in the case of numerous nonlinear methods, i.e. three- or four-wave-mixing;
- often require spatial optics (not based on optical fibres), like, e.g. a diffraction grating

### Solution to the Problem

A number of applications, e.g. optical coherence tomography (OCT), need the ability to modify the spectral width of short light pulses with a varying central wavelength. The existing methods for narrowing the spectral width do not work for pulses with a rapidly changing (above approx. 100 kHz) central wavelength, and they require changing the light source (laser). The current application of the invention proposes a solution based on an electro-optic time lens, which allows for reducing the spectral width of picosecond light pulses with similar efficiency regardless of the central wavelength, with no need for any tuning. The device is compatible with pulses whose central wavelength changes with a frequency of up to 5 GHz.

### Disclosure of the Essence of the Invention

The method for spectral narrowing of laser light pulses according to the invention is characterised in that the laser pulses are put into a group delay dispersion medium (chirping medium) via an optical fibre, where they are chirped; subsequently, the optical signal obtained in this manner is split by means of a beam splitter (BS) into two parts; the first part of the optical signal is directed directly to an electro-optic phase modulator (EOPM), while the second part of the optical signal is directed via an optical delay element to a light detector (PD), which generates a pulsed output electrical signal corresponding to said second part of the pulsed optical signal directed to the light detector (PD), while the output electrical signal from the light detector (PD) is used to drive the electro-optic phase modulator (EOPM) and controls said electro-optic phase modulator (EOPM) in such a way that the modulator executes spectral shifts of time-distributed spectral components of laser light pulses of the first part of the optical signal adequately to narrow the spectrum of these light pulses.

Preferably, the output electrical signal from the light detector (PD) is used to drive the electro-optic phase modulator (EOPM) with a delay of *Δt* between the first part of the optical signal and the output electrical signal from the light detector (PD), adjusted so that the spectrum of laser light pulses becomes narrowed.

Preferably, the output electrical signal from the light detector (PD) is amplified in an electronic amplifier (AMP) before being used to control the electro-optic phase modulator (EOPM).

Preferably, a photodiode (PD), a photomultiplier, a superconducting detector or another detector which generates a pulsed electrical signal on the basis of the pulsed optical signal is used as the light detector.

Preferably, the optical signal propagates via optical fibre elements only, i.e. without propagating the light beam in the (free) space.

The invention also comprises a system for spectral narrowing of laser light pulses, comprising an optical input for introducing the laser pulses, a group delay dispersion medium (*chirping medium*) for receiving the introduced laser light pulses from the optical input, a beam splitter (BS) for receiving a signal from a group delay dispersion medium and configured to split the optical signal obtained in this manner into two parts, and an electro-optic phase modulator (EOPM) configured to:receive the first part of the optical signal directly; an optical delay elementand a light detector configured to receive the second part of the optical signal via an optical delay element and to generate a pulsed output electrical signal, corresponding to said second part of the pulsed optical signal directed to the light detector (PD)and an electro-optic phase modulator (EOPM) further configured to receive the output electrical signal from the light detector (PD) as a signal controlling this electro-optic phase modulator (EOPM), wherein said electro-optic phase modulator (EOPM) is configured to execute the spectral shifts of time-distributed spectral components of laser light pulses of the first part of the optical signal adequately to narrow the spectrum of these pulses.

Preferably, the system according to the invention additionally comprises an electronic amplifier (AMP) configured to amplify the output electrical signal from the light detector (PD) before using it to control the electro-optic phase modulator (EOPM).

Preferably, the light detector is a photodiode (PD), a photomultiplier, a superconducting detector or another detector capable of generating a pulsed electrical signal on the basis of the pulsed optical signal.

Preferably, propagation of the optical signal in the system uses optical fibre elements, therefore avoiding propagation of the light beam in the (free) space.

Therefore, the essence of the invention is in that the generation of the electrical signal controlling the electro-optic phase modulator (EOPM) uses laser pulses which have experienced the same group delay dispersion as the modulated pulses in the modulator, therefore ensuring synchronisation of both in the modulator, regardless of their central wavelength.

The advantage of the invention is that synchronisation of the modulating and modulated signal (under the condition of a single setting of *Δt*) is invariable, regardless of the central wavelength of the laser pulse/light.

### Detailed Description of the Invention

The invention is presented in a preferred embodiment with reference to the attached drawings, in which:
Fig. 1 Presents a schematic diagram of a self-tunable spectral compressor, without monitoring the central wavelength-it is not necessary. In the embodiment presented in the drawing, the role of the light detector is fulfilled by a photodiode (PD), but this can alternatively be a photomultiplier, a superconducting detector or another detector which generates a pulsed electrical signal on the basis of a pulsed optical signal
Fig. 2 Presents a diagram of the system according to the invention.
Fig. 3 Presents sample input (dashed line) and output (solid line) spectra of optical pulses for several sample central wavelengths. The spectra have been obtained without changing the parameters of the compressor; only the central wavelength of pulses emitted by the laser was changed.
Fig. 4 Presents the results of measuring the spectral width, coherence time and enhancement of the spectral density of the signal for the central wavelength at the output of the compressor for tuning the central wavelength of the input signal.

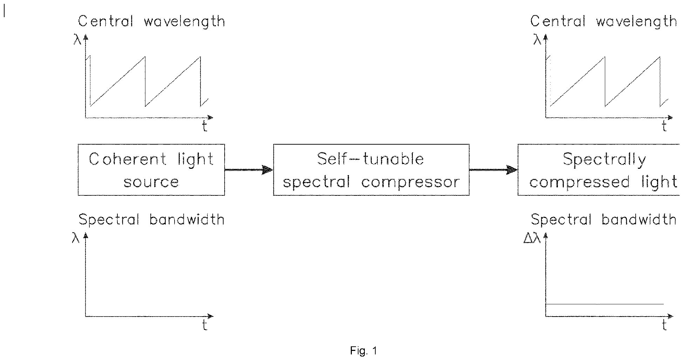

The solution according to the present invention enables narrowing the spectrum of light pulses by an order of magnitude and increasing their coherence time (and therefore also coherence length), regardless of the central wavelength of the light pulse. The use of the compressor is presented schematically in Fig. 1. The optical signal (in the form of a series of pulses) with a time-varying central wavelength *λ* and a large spectral width *Δλ* is modified in such a manner that the spectral width of pulses is reduced while maintaining changes in the central wavelength over time. The pulses generated at the output have a constant spectral width, independent of the central wavelength. Typically, the spectrum of light pulses is narrowed by the use of spectral filters in the form of interference filters incapable of tuning, which narrow the spectrum, but only of a single chosen central wavelength (examples: https://www.thorlabs.com/navigation.cfm?quide_id=2210). Moreover, it is possible to use more complicated optical systems (known as the 4-f system or a pulse shaper), which allow for obtaining a tunable spectral filter; however, tuning proceeds very slowly, typically one tuning per second (a commercial example: Coherent Waveshaper). Therefore, neither method allows for narrowing the spectrum of light pulses, which pulses repeat with a frequency exceeding kHz, with various central wavelengths, e.g. when each consecutive light pulse features a different wavelength. Moreover, spectral filtering described above reduces the total power of the light behind the filter, since a part of it is absorbed/reflected by the filter. Tuned spectral filtering also requires independent monitoring of the central wavelength, in order to provide a control signal for tuning. More information about the previously known related technologies is provided in the "Prior Art" section.

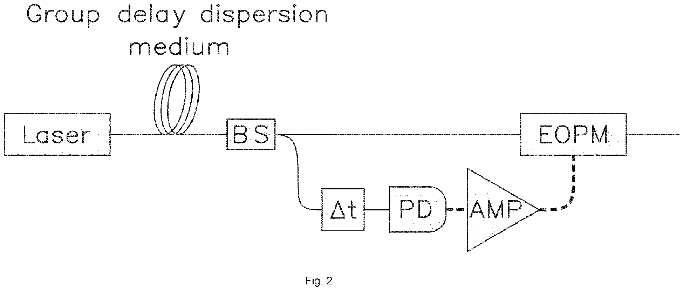

The solution according to the invention is a self-tunable spectral compressor, which can narrow the light spectrum by a factor of 10 regardless of its central wavelength. A diagram of the solution is presented in Fig. 2 and described in the following description of the invention. The source of optical pulses is a laser, but it is not a part of the proposed solution. Optical pulses are introduced into a group delay dispersion medium (*GDD*), meaning a chirping medium. Subsequently, the signal is split by means of a beam splitter (BS). A part of the signal is directed straight into an electro-optic phase modulator (EOPM). Via an optical delay element (in the presented preferable embodiment-an optical delay line), the other part reaches a light detector (in a preferable embodiment-a photodiode) (*photodiode detector,* PD). The output signal from the detector is amplified in an electronic amplifier (AMP) and controls the phase modulator. For a (once) properly adjusted delay *Δt* between the optical signal passing through the modulator and the control signal, as well as proper amplification and the electronic bandwidth of the photodiode and the amplifier, the spectrum of optical pulses becomes narrowed. This is because the chirping medium introduces various delays for various spectral components of optical pulses: various spectral components are distributed in time. The modulator driven by an amplified response signal of the detector executes the spectral shifts of these time-distributed spectral components. The spectrum becomes narrowed with properly adjusted parameters.

The solution according to the present invention is based on the so-called time lens presented in the paper [Applied Physics Letters 116, 234003 (2020)], albeit with a significant change in generation of the signal used to modulate light pulses. In the cited paper, the use of a dispersive material (optical fibre) and an electro-optic phase modulator always narrows the spectrum of light pulses around one central wavelength of the light. This is due to the manner of generating the electrical signal fed to the modulator, obtained on the basis of a separate optical signal bypassing the dispersive element. In particular, synchronisation of the optical and electronic signal in the modulator is not maintained with a change in the central wavelength of optical pulses, which results in narrowing the spectrum only for a single selected central wavelength of optical pulses. In the invention presented herein, a significant change has been made in the generation of the electrical signal, which now takes place on the basis of a part of the optical signal also passing through the dispersive element. This causes the electrical signal to always be perfectly synchronised with the optical signal, which results in spontaneous tuning of the central wavelength of the compressor, so that the spectrum of optical pulses is always narrowed around their central wavelength, regardless of their central wavelength. In particular, this allows for spontaneous tuning of such a compressor on pulse-by-pulse basis, whose repetition frequency may amount to tens of MHz in the presented experimental implementation, and ultimately it may exceed 5 GHz.

The operation of a spectral compressor based on a time lens is in line with the so-called temporal optics. Review papers on temporal optics include [Torres Company, Progress in Optics 2011 https://doi.org/10.10161B978-0-444-53886-4.00001-0 and Salem et al. AOP 2013, https://opg.optica.org/aop/abstract.cfm?uri=aop-5-3-274]

The operating principle of the invention is based on a time-varying Doppler effect achieved by proper generation of an electrical signal fed to an electro-optic phase modulator. The method according to the invention comprises two steps: 1) transmitting the incoming light pulses through a group delay dispersion (or *chirp*) medium, which introduces various delays for various wavelengths of the light, so that the envelope of a light pulse spectrum is linearly mapped to its time envelope, and subsequently 2) applying a time-varying phase to optical pulses by an electro-optic phase modulator, which induces the spectral shifts of individual spectral components of the pulse towards the central wavelength, via an electro-optic Doppler effect. Since an optical pulse after the first step, with applied group delay dispersion, is characterised by linear dependence of the wavelength over the duration of the pulse, while the spectral shift is proportional to the phase slope (or its instantaneous frequency), the shape of the phase applied by the electro-optic modulator is required to have a linearly varying slope in the form of a quadratic phase. At this point, various parts of the pulse (with previously applied group delay dispersion) experience various spectral shifts, varying linearly over time. The only part of the pulse which will not experience a change in the wavelength is selected by the centre of symmetry of the quadratic phase, since the slope in this place is zero. This results in spectral compression around the wavelength of the light selected by the centre of symmetry of the quadratic phase. Temporal modulation of the light phase in an electro-optic modulator is achieved by feeding time-dependent voltage to the modulator, while the resulting phase modulation is directly proportional to the applied voltage. In order to achieve modulation with the quadratic phase, it is necessary to generate an electrical signal comprising quadratic time dependence of voltage. Like in the paper [Applied Physics Letters 116, 234003 (2020)], in our invention we perform detection of laser pulses by means of a photodiode which generates an electric pulse. Since such a pulse comprises an extremum, and each extremum (minimum or maximum) can be approximated by a quadratic function, the result is an electrical signal with quadratic variability over time, which after amplification is fed to an electro-optic phase modulator. However, it should be noted that in the case described earlier, the temporal characteristics of a laser pulse generating an electric pulse on a photodiode are independent of its central wavelength. This causes the laser pulses to be spectrally compressed in this manner only around a single selected central wavelength of the light. Therefore, this approach is not suitable for a rapidly tunable compressor/spectral filter.
In the present invention, a considerable change in the generation of electric pulses has been made through the use of a part of optical pulses with already introduced group delay dispersion for this purpose, which changes the temporal characteristics of the electric pulses generated further by the photodiode. In particular, a change in the central wavelength of laser pulses introduced into the present device according to the invention causes an automatic time shift of the generated electric pulses (further fed to the modulator), so that the central wavelength of the light around which spectral compression occurs always coincides with the central wavelength of the laser pulse which is being modulated, resulting in self-tuning of the device according to the central wavelength of the light of the laser pulses entering the device. In particular, such tuning is achieved for each laser pulse, regardless of the repetition frequency of the laser pulses.
Alternatively, the operating principle of the solution can be explained in the context of temporal optics and optical space-time duality (OSTD) [Torres Company et al., Prog. Opt. 56, 1-80 (2011)], which results from the mathematical equivalence of the equations describing paraxial diffraction of the light beam in space, and propagation of a narrow-band optical pulse in a dispersive medium, in a slowly varying envelope approximation. For example, applying a chirp to an optical pulse by transmitting it across a group delay dispersion medium, which results in applying a quadratic spectral phase to the pulse *Φ*(*ω - ω0)^2*/*2,* where *Φ* is group delay dispersion (GDD), constitutes a spectral and temporal analogue of broadening a beam in space due to diffraction, which is described by applying a quadratic phase in spatial frequencies.

By using OSTD, it is subsequently possible to assume a time lens (TL) which applies a time-varying quadratic phase *Kt*^*2*/*2* to the pulse, where *K* is the so-called constant chirp rate, and *t* is the time in a reference system moving along with the centre of the pulse. Due to OSTD, it corresponds to the quadratic spatial phase applied transversely to a spatial beam once it has passed through an ordinary lens. OSTD is a basis for numerous applications of spectral and temporal shaping of optical pulses. The compression of spectral width is an analogue of spatial collimation of a Gaussian beam (meaning reduction of its spatial frequency spectrum) by placing a spatial lens at a focal length from the beam waist. Therefore, the compression of spectral width may be achieved by applying a chirp to an optical pulse in a group delay dispersion medium (GDD), followed by a time lens with a chirp rate fulfilling the collimation condition *K* = *Φ^{-1}*.

In order to experimentally implement a time lens, a time-varying parabolic voltage signal with a radio frequency (RF) is fed to a travelling wave electro-optic phase modulator (EOPM), based on a transverse Pockels electro-optic effect. The RF signal controlling the modulator is generated directly from an optical reference signal through its detection by means of a fast photodiode, and enhancement of the output signal from the photodiode, as presented in Fig. 2. The maxima and minima of the response signal from the photodiode-amplifier system are parabolic with a very good approximation, and thus allow the implementation of a time lens. The chirp rate *K* can be found by taking the second derivative of the phase shift introduced by the electro-optical modulator with respect to time.

An optical reference is produced by a laser beam splitter placed behind a group delay dispersion medium. The chirped reference signal obtained in this manner is delayed by an optical delay line *Δt,* which enables synchronisation of the time lens with the signal pulses passing through the modulator. This method ensures internal synchronisation with very low temporal noise, independent of the repetition frequency of the laser pulses, or of the periodicity of their repetition itself [Applied Physics Letters 116, 234003 (2020)]. Obtaining a reference signal at the output of the group delay dispersion medium is of key significance for ensuring synchronisation regardless of the central wavelength of the optical signal, since it eliminates changes in the relative delay of signal pulses and in the time lens, resulting from group delay dispersion in a chirp-introducing medium while changing the central wavelength of the signal pulses.
In the experimental system according to the invention, a fast photodiode (PD, EOT ET-3500F, bandwidth > 12.5 GHz) is used as an RF signal source, as shown in Fig. 2. It is preceded by an optical delay line *Δt* with a delay adjustable within a range between 0 and 15 ns, making it possible to ensure synchronisation. A constant delay value can be used for specific operating parameters of the device. An electrical signal constituting a pulsed response of the circuit comprising the photodiode is obtained at the output of the photodiode, provided the duration of the optical pulses detected by the photodiode is shorter than an inverse for the electronic bandwidth of the photodiode. Since the reference pulse reaching the photodiode has passed through a group delay dispersion medium, it is extended in time approximately proportionally to its spectral width. This results in the appearance of an upper limit of the spectral width of the input optical signal. Subsequently, the RF signal from the photodiode is transmitted to a high-power microwave amplifier (MiniCircuits ZVE-3W-183+, 3W, an RF 5.9-18 GHz band) by means of a coaxial cable, in order to reach a high phase modulation amplitude level, necessary to achieve a considerable degree of compression of the spectral band by means of an electro-optic time lens. Optical reference power is set so as to make the amplifier operate in saturation or close to saturation. (Pulsed) operation with saturation ensures a certain degree of independent functioning of the system from changes in the optical power of the input signal. It also allows for achieving the highest possible modulation amplitude. The signal from the amplifier is fed by means of a short coaxial cable to the electro-optical phase modulator. The optical signal is fed to the modulator by means of an polarization-maintaining optical fibre. When using a volumetric electro-optic phase modulator, it is also possible to feed the optical signal to the modulator in the form of a volumetric beam.

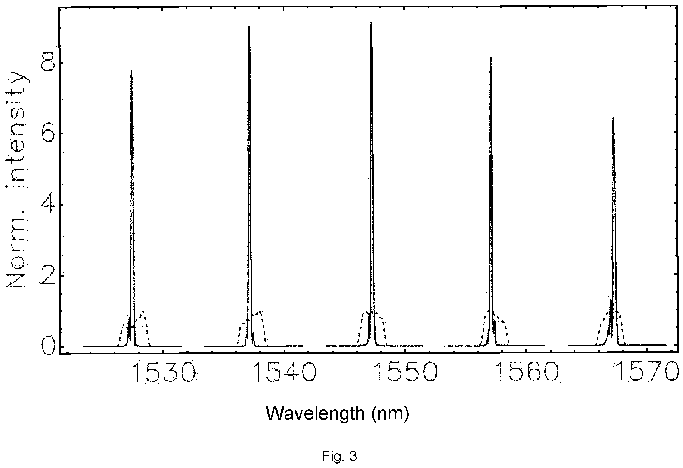

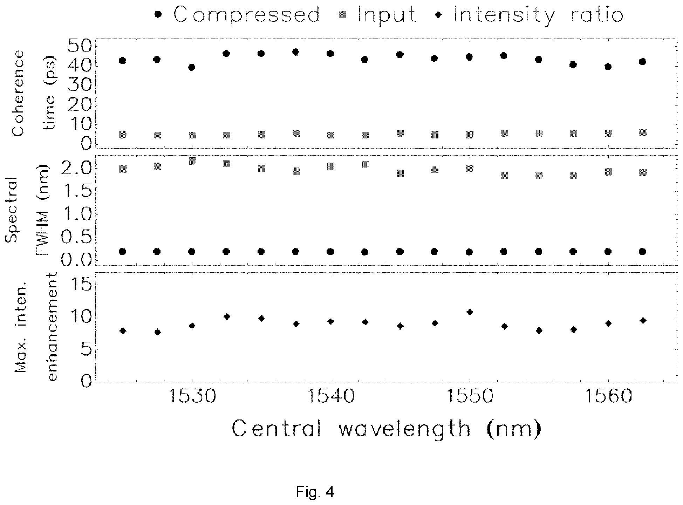

The results of operating the compressor are presented in Fig. 3 and Fig 4. Fig. 3 presents sample input and narrowed spectra. There is a visible narrowing of the spectral width and enhancement of the signal level for the central wavelength. Fig. 4 presents the measured dependence of the spectral width, coherence time and enhancement of the spectral density of the signal for the central wavelength, depending on the central wavelength. The results were obtained without any tuning of the compressor parameters.

### Advantages of the Invention:

- Spontaneous tuning of the central wavelength to the light pulse introduced into the device, with no need for the user's interference.
- In particular, the ability to instantaneously tune the central wavelength of the device pulse by pulse, with a repetition frequency exceeding hundreds of MHz.
- Lower losses in the optical signal compared to the spectral filters, since instead of rejecting (filtering) a part of the signal power, it becomes spectrally compressed, increasing spectral density.
- The device is capable of broadband operation, i.e. for central wavelengths within a range of, e.g. 100 nm, depending on the dispersive elements and electro-optic modulator used.

### Other Features of the Invention:

- The necessary minimum power of the optical signal depending on the components used.
- Dependence of the compression ratio on the power of the optical signal.
- Limited to the maximum spectral width of pulses due to the condition of a pulsed response of the photodiode.
- The necessity to use short (about picosecond) light pulses.
- Higher orders of chromatic dispersion (meaning higher than a linear group delay) narrow the maximum range of central wavelengths.
- The device works with a single polarization of light only, but the use of two identical devices, each for one of the two orthogonal polarizations, allows for overcoming this limitation.
- The ability to skip an electronic amplifier (*AMP*)*,* depending on the photodiode and electro-optic modulator used.

### Possible Areas of Using the Invention

- SSOCT-swept-source optical coherence tomography.
- OCT-optical coherence tomography.

Optical coherence tomography (OCT) allows for non-invasive examinations of biological tissues, in particular for obtaining their three-dimensional cross-sections. In OCT, the measurement depends on a rapidly tunable (in the central wavelength) narrow band (with a narrow optical spectrum) pulsed laser, where quick tunability contributes to the total measurement time. A narrow optical spectrum is in turn needed to obtain a large light coherence length (inversely proportional to the spectral width), which defines the measured tissue depth. The system according to the invention placed behind the laser and before the OCT system would automatically allow for narrowing the spectrum of laser pulses by a factor of ten, regardless of the speed of retuning their central wavelength, which would in turn allow for a considerable increase in the measured depth of the biological tissue, which is currently unavailable for other methods. We are also expecting applications in other fields, where there is a need to increase the coherence length of optical pulses with a varying central wavelength.

## Claims

1. A method for spectral narrowing of laser light pulses the laser pulses are put into a group delay dispersion medium via an optical fibre, where they are chirped, subsequently, the optical signal obtained in this manner is split by means of a beam splitter, BS, into two parts; the first part of the optical signal is directed directly to an electro-optic phase modulator, EOPM, while the second part of the optical signal is directed via an optical delay element to a light detector, wherein the light detector generates a pulsed output electrical signal corresponding to said second part of the pulsed optical signal directed to the light detector, while the output electrical signal from the light detector is used to drive the electro-optic phase modulator and to control said electro-optic phase modulator in such a way that the modulator executes spectral shifts of time-distributed spectral components of laser light pulses of the first part of the optical signal adequately to narrow the spectrum of these light pulses.

2. The method according to claim 1, wherein the output electrical signal from the light detector is used to drive the electro-optic phase modulator with a delay of *Δ*t between the first part of the optical signal and the output electrical signal from the light detector adjusted so that the spectrum of laser light pulses becomes narrowed.

3. The method according to claim 1 or 2, wherein the output electrical signal from the light detector is amplified in an electronic amplifier, AMP, before being used to control the electro-optic phase modulator.

4. The method according to claim 1, 2 or 3, wherein a photodiode, PD, a photomultiplier, a superconducting detector or another detector which generates a pulsed electrical signal on the basis of the pulsed optical signal is used as the light detector.

5. The method according to claim 1, 2, 3 or 4, wherein the optical signal propagates only via optical fibre elements.

6. A system for spectral narrowing of laser light pulses, comprising
- an optical input for introducing the laser pulses,
- a group delay dispersion medium for receiving the introduced laser light pulses from the optical input,
- a beam splitter, BS, for receiving a signal from a group delay dispersion medium and configured to split the optical signal obtained in this manner into two parts, and
- an electro-optic phase modulator, EOPM, configured to receive the first part of the optical signal directly,
- an optical delay element and
- a light detector,
wherein the light detector is configured to receive the second part of the optical signal via the optical delay element and further generate a pulsed output electrical signal, corresponding to said second part of the pulsed optical signal directed to the light detector,
wherein the electro-optic phase modulator is further configured to receive an pulsed output electrical signal from the light detector as a signal controlling this electro-optic phase modulator, the electro-optic phase modulator being configured to execute the spectral shifts of time-distributed spectral components of laser light pulses of the first part of the optical signal adequately to narrow the spectrum of these pulses.

7. The system according to claim 6, additionally comprising an electronic amplifier, AMP, configured to amplify the output electrical signal from the light detector before using it to control the electro-optic phase modulator.

8. The system according to claim 6 or 7, wherein the light detector is a photodiode, PD, a photomultiplier, a superconducting detector or another detector capable of generating a pulsed electrical signal on the basis of the pulsed optical signal.

9. The system according to claim 6, 7 or 8, wherein propagation of the optical signal in the system uses optical fibre elements only.

## Patentansprüche

1. Verfahren zur spektralen Einengung von Laserlichtimpulsen die Laserimpulse werden über eine optische Faser in ein gruppenverzögerndes Dispersionsmedium eingespeist, wo sie frequenzmoduliert werden, anschließend wird das so erhaltene optische Signal mittels eines Strahlteilers, BS, in zwei Teile aufgeteilt; der erste Teil des optischen Signals wird direkt zu einem elektrooptischen Phasenmodulator, EOPM, geleitet, während der zweite Teil des optischen Signals über ein optisches Verzögerungselement zu einem Lichtdetektor geleitet wird, wobei der Lichtdetektor ein gepulstes elektrisches Ausgangssignal erzeugt, das dem zweiten Teil des zu dem Lichtdetektor geleiteten gepulsten optischen Signals entspricht, während das elektrische Ausgangssignal von dem Lichtdetektor verwendet wird, um den elektrooptischen Phasenmodulator anzusteuern und den elektrooptischen Phasenmodulator so zu steuern, dass der Modulator spektrale Verschiebungen von zeitlich verteilten Spektralkomponenten von Laserlichtimpulsen des ersten Teils des optischen Signals in geeigneter Weise ausführt, um das Spektrum dieser Lichtimpulse einzuengen.

2. Verfahren nach Anspruch 1, bei dem das elektrische Ausgangssignal des Lichtdetektors zur Ansteuerung des elektrooptischen Phasenmodulators verwendet wird, wobei eine Verzögerung von *Δ*t zwischen dem ersten Teil des optischen Signals und dem elektrischen Ausgangssignal des Lichtdetektors eingestellt wird, so dass das Spektrum der Laserlichtimpulse eingeengt wird.

3. Verfahren nach Anspruch 1 oder 2, wobei das elektrische Ausgangssignal des Lichtdetektors in einem elektronischen Verstärker, AMP, verstärkt wird, bevor es zur Steuerung des elektrooptischen Phasenmodulators verwendet wird.

4. Verfahren nach Anspruch 1, 2 oder 3, wobei als Lichtdetektor eine Photodiode, PD, ein Photomultiplier, ein supraleitender Detektor oder ein anderer Detektor verwendet wird, der auf der Grundlage des gepulsten optischen Signals ein gepulstes elektrisches Signal erzeugt.

5. Verfahren nach Anspruch 1, 2, 3 oder 4, wobei sich das optische Signal nur über optische Faserelemente ausbreitet.

6. System zur spektralen Einengung von Laserlichtimpulsen, welches Folgendes umfasst
- einen optischen Eingang zur Einspeisung der Laserimpulse,
- ein gruppenverzögerndes Dispersionsmedium zum Empfang der eingeleiteten Laserlichtimpulse vom optischen Eingang,
- einen Strahlteiler, BS, zum Empfang eines Signals von einem gruppenverzögernden Dispersionsmedium, das so konfiguriert ist, dass es das auf diese Weise erhaltene optische Signal in zwei Teile aufteilt, und
- einen elektrooptischen Phasenmodulator (EOPM), der so konfiguriert ist, dass er den ersten Teil des optischen Signals direkt empfängt,
- ein optisches Verzögerungselement und
- einen Lichtdetektor,
wobei der Lichtdetektor so konfiguriert ist, dass er den zweiten Teil des optischen Signals über das optische Verzögerungselement empfängt und ferner ein gepulstes elektrisches Ausgangssignal erzeugt, das dem zweiten Teil des gepulsten optischen Signals entspricht, das an den Lichtdetektor gerichtet ist,
wobei der elektrooptische Phasenmodulator ferner so konfiguriert ist, dass er ein gepulstes elektrisches Ausgangssignal von dem Lichtdetektor als ein Signal empfängt, das diesen elektrooptischen Phasenmodulator steuert, wobei der elektrooptische Phasenmodulator so konfiguriert ist, dass er die spektralen Verschiebungen von zeitlich verteilten Spektralkomponenten von Laserlichtimpulsen des ersten Teils des optischen Signals in geeigneter Weise ausführt, um das Spektrum dieser Impulse zu verengen.

7. System nach Anspruch 6, das zusätzlich einen elektronischen Verstärker, AMP, umfasst, der so konfiguriert ist, dass er das elektrische Ausgangssignal des Lichtdetektors verstärkt, bevor er es zur Steuerung des elektrooptischen Phasenmodulators verwendet.

8. System nach Anspruch 6 oder 7, wobei der Lichtdetektor eine Photodiode, ein PD, ein Photomultiplier, ein supraleitender Detektor oder ein anderer Detektor ist, der in der Lage ist, ein gepulstes elektrisches Signal auf der Grundlage des gepulsten optischen Signals zu erzeugen.

9. System nach Anspruch 6, 7 oder 8, bei dem die Ausbreitung des optischen Signals in dem System ausschließlich über optische Faserelemente erfolgt.

## Revendications

1. Un procédé de réduction spectral des impulsions de lumière laser, les impulsions laser sont introduites dans un milieu de dispersion à retard de groupe via une fibre optique, où elles sont chirpées, puis le signal optique ainsi obtenu est divisé en deux parties au moyen d'un séparateur de faisceau (BS) ; la première partie du signal optique est dirigée directement vers un modulateur de phase électro-optique, EOPM, tandis que la seconde partie du signal optique est dirigée vers un détecteur de lumière via un élément de retard optique, le détecteur de lumière générant un signal électrique de sortie pulsé correspondant à ladite seconde partie du signal optique pulsé dirigé vers le détecteur de lumière, le signal électrique de sortie du détecteur de lumière est utilisé pour piloter le modulateur de phase électro-optique et pour commander ledit modulateur de phase électro-optique de manière à ce que le modulateur effectue des décalages spectraux des composantes spectrales distribuées dans le temps des impulsions de lumière laser de la première partie du signal optique afin de réduire le spectre de ces impulsions de lumière de manière adéquate.

2. Le procédé selon la revendication 1, dans lequel le signal électrique de sortie du détecteur de lumière est utilisé pour piloter le modulateur de phase électro-optique avec un retard de *Δt* entre la première partie du signal optique et le signal électrique de sortie du détecteur de lumière, ajusté de manière à ce que le spectre des impulsions de lumière laser soit réduit.

3. Le procédé selon la revendication 1 ou 2, dans laquelle le signal électrique de sortie du détecteur de lumière est amplifié dans un amplificateur électronique, AMP, avant d'être utilisé pour commander le modulateur de phase électro-optique.

4. Le procédé selon la revendication 1, 2 ou 3, dans lequel une photodiode, PD, un photomultiplicateur, un détecteur supraconducteur ou un autre détecteur qui génère un signal électrique pulsé sur la base du signal optique pulsé est utilisé comme détecteur de lumière.

5. Le procédé selon la revendication 1, 2, 3 ou 4, dans lequel le signal optique se propage uniquement via des éléments de fibre optique.

6. Un système de réduction spectral des impulsions de lumière laser, comprenant
- une entrée optique pour introduire les impulsions laser,
- un milieu de dispersion à retard de groupe pour recevoir les impulsions de lumière laser introduites à partir de l'entrée optique,
- un séparateur de faisceau, BS, destiné à recevoir un signal provenant d'un milieu de dispersion à retard de groupe et configuré pour diviser le signal optique ainsi obtenu en deux parties, et
- un modulateur de phase électro-optique, EOPM, configuré pour recevoir directement la première partie du signal optique,
- un élément de retard optique et
- un détecteur de lumière,
dans lequel le détecteur de lumière est configuré pour recevoir la seconde partie du signal optique via l'élément de retard optique et pour générer un signal électrique de sortie pulsé, correspondant à la seconde partie du signal optique pulsé dirigé vers le détecteur de lumière,
dans lequel le modulateur de phase électro-optique est en outre configuré pour recevoir un signal électrique de sortie pulsé du détecteur de lumière en tant que signal commandant ce modulateur de phase électro-optique, le modulateur de phase électro-optique étant configuré pour exécuter les décalages spectraux des composantes spectrales distribuées dans le temps des impulsions de lumière laser de la première partie du signal optique de manière à réduire le spectre de ces impulsions de manière adéquate.

7. Le système selon la revendication 6, comprenant en outre un amplificateur électronique, AMP, configuré pour amplifier le signal électrique de sortie du détecteur de lumière avant de l'utiliser pour commander le modulateur de phase électro-optique.

8. Le système selon la revendication 6 ou 7, dans lequel le détecteur de lumière est une photodiode, PD, un photomultiplicateur, un détecteur supraconducteur ou un autre détecteur capable de générer un signal électrique pulsé sur la base du signal optique pulsé.

9. Le système selon la revendication 6, 7 ou 8, dans lequel la propagation du signal optique dans le système utilise uniquement des éléments de fibre optique.
